(19) Europäisches Patentamt
European Patent Office
Office européen des brevets

(11) **EP 0 692 710 B1**

(12) **FASCICULE DE BREVET EUROPEEN**

(45) Date de publication et mention
de la délivrance du brevet:
**13.02.2002 Bulletin 2002/07**

(51) Int Cl.$^7$: **G01N 21/90**

(21) Numéro de dépôt: **95420195.0**

(22) Date de dépôt: **12.07.1995**

(54) **Procédé et dispositif de traitement d'images pour détecter des défauts réfléchissant la lumière**

Verfahren und Vorrichtung zur Bildverarbeitung zur Prüfung auf lichtreflektierende Fehler

Method and device for image processing for detecting light reflecting faults

(84) Etats contractants désignés:
**AT BE CH DE DK ES FR GB IT LI NL**

(30) Priorité: **12.07.1994 FR 9408875**

(43) Date de publication de la demande:
**17.01.1996 Bulletin 1996/03**

(73) Titulaire: **BSN**
**69611 Villeurbanne Cedex (FR)**

(72) Inventeur: **Zhang Ruo Dan**
**F-69100 Villeurbanne (FR)**

(74) Mandataire: **Thibault, Jean-Marc**
**Cabinet Beau de Loménie 51, Avenue Jean Jaurès B.P. 7073**
**69301 Lyon Cédex 07 (FR)**

(56) Documents cités:
**EP-A- 0 222 959      EP-A- 0 483 966**
**EP-A- 0 574 890      EP-A- 0 647 480**
**FR-A- 1 517 766      US-A- 3 245 533**
**US-A- 3 598 907      US-A- 4 020 949**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

**Description**

La présente invention concerne le domaine technique de l'inspection d'objets ou d'articles creux translucides ou transparents, tels que par exemple des bouteilles ou des flacons, en vue de déceler d'éventuels défauts présentés par l'article et possédant la caractéristique de réfléchir la lumière. Le contrôle de la qualité de tels articles apparaît nécessaire, afin d'éliminer les articles qui présentent des défauts susceptibles d'affecter leur caractère esthétique ou, plus grave, de présenter un réel danger pour l'utilisateur.

L'objet de l'invention vise, plus précisément, le domaine de la détection de défauts, appelés généralement glaçures, en exploitant leur caractéristique essentielle qui est celle de réfléchir une lumière incidente.

L'invention concerne, plus particulièrement, les techniques d'inspection consistant à entraîner en rotation les articles, en vue de détecter les glaçures présentées par les bagues de tels articles.

L'art antérieur a proposé de nombreuses solutions faisant appel à une telle technique de détection. Ainsi, le document **EP-0 456 910** décrit un dispositif assurant l'inspection d'articles creux destinés à être mis en rotation autour de leur axe central. Un système d'éclairage est apte à fournir un faisceau lumineux incident concentré par une lentille sur la partie supérieure de la bague de l'article. Un système de réception, tel qu'une caméra matricielle, reçoit les faisceaux lumineux réfléchis, notamment par des glaçures verticales, lors de la rotation de l'article. La caméra est reliée à une unité de traitement indiquant si les faisceaux réfléchis dépassent un seuil d'intensité lumineuse prédéterminée, au-delà duquel un défaut est constaté.

Un tel dispositif ne permet pas d'identifier les défauts réels provenant de glaçures, en les différenciant des signaux parasites dus à des éclairements parasites ou aux filets de vissage pour des bouchons. En effet, le principe de ce dispositif, qui repose sur la détection d'un niveau de seuil d'intensité lumineuse reçue par la caméra, conduit à identifier, comme un défaut, un signal parasite atteignant le seuil de détection.

Pour tenter de résoudre le problème de la différenciation des faisceaux réfléchis correspondant à des réflexions parasites de ceux correspondant à des défauts de l'objet, le document **EP-A-0 483 966** propose de mettre en oeuvre un dispositif comportant une source lumineuse éclairant le fond d'une bouteille placée sur un support entraîné en rotation. Une caméra prend des images du fond de la bouteille à travers une fenêtre de scrutation ménagée dans le support de la bouteille. La caméra est reliée à une unité d'analyse et de traitement des faisceaux lumineux reçus, adaptée pour former, selon une cadence donnée, des images successives de l'objet formées chacune d'un nombre déterminé de pixels. L'unité d'analyse et de traitement effectue, ensuite, après une resynchronisation des deux images successives, une différence entre les pixels des deux images précitées et un comptage par rapport à des valeurs de seuil, de façon à permettre de distinguer les faisceaux réfléchis de nature stationnaire, correspondant à des réflexions parasites, de ceux de nature variable, correspondant à des défauts de l'objet.

La technique décrite par cette demande de brevet, qui vise à établir une différence pixels à pixels d'images décalées et resynchronisées, ne se trouve pas adaptée en pratique pour détecter des glaçures affectant la bague des articles transparents ou translucides. En effet, cette technique, qui effectue en fait une différence spatiale entre les images, est inévitablement entachée des erreurs de déplacement en rotation de l'article, en raison des déformations géométriques que présentent les articles à contrôler. De plus, les systèmes d'éclairage et de récupération des faisceaux lumineux réfléchis décrits par ce document ne sont pas en mesure de détecter les défauts présentés par un objet creux et provenant aussi bien des glaçures verticales que des glaçures horizontales.

L'objet de l'invention vise donc à offrir un procédé conçu pour distinguer les signaux parasites des défauts présentés par un objet creux transparent ou translucide et provenant aussi bien des glaçures verticales que des glaçures horizontales.

Pour atteindre cet objectif, le procédé selon l'invention consiste :

- à éclairer une zone de l'objet creux par au moins un faisceau incident,
- à assurer la rotation relative par rapport au faisceau incident de l'objet creux selon son axe central,
- à acquérir les faisceaux lumineux réfléchis par l'objet, en vue de former des images successives de l'objet selon une cadence déterminée,
- et à réaliser une opération de comparaison entre au moins deux images successives, de manière à distinguer les faisceaux réfléchis de nature stationnaire, correspondant à des réflexions parasites, de ceux de nature variable correspondant à des défauts de l'objet.

Selon l'invention, le procédé consiste :

- à effectuer, en tant qu'opération de comparaison, une opération d'analyse comparative des paramètres morphologiques, de la luminosité et des positions temporelle et spatiale des tâches lumineuses apparaissant sur des images successives,
- à éclairer la paroi intérieure de l'objet, à l'aide d'un faisceau incident, en vue de détecter les défauts horizontaux,
- à éclairer la paroi extérieure de l'objet à l'aide de faisceaux incidents, en vue de détecter les défauts verticaux,
- et à disposer, sur le trajet des faisceaux lumineux réfléchis, un élément optique de récupération, en vue de leur acquisition et traitement.

Diverses autres caractéristiques ressortent de la description faite ci-dessous en référence aux dessins annexés qui montrent, à titre d'exemples non limitatifs, des formes de réalisation et de mise en oeuvre de l'objet de l'invention.

La **fig. 1** est une vue schématique en élévation de la mise en oeuvre d'un dispositif de détection selon l'invention.

La **fig. 2** est un schéma-bloc fonctionnel illustrant le principe de fonctionnement du dispositif de détection selon l'invention.

Les **fig. 3A** à **3D** montrent diverses images illustrant un exemple de fonctionnement du dispositif selon l'invention.

La **fig. 4** est une vue en perspective illustrant un exemple préféré de réalisation d'un dispositif de détection conforme à l'invention.

Les fig. **5A** et **5B** sont des schémas montrant, dans le plan vertical, le trajet des faisceaux lumineux du dispositif de détection illustré à la **fig. 4.**

La **fig. 6** est un schéma montrant, dans le plan horizontal, le trajet des faisceaux lumineux du dispositif de détection illustré à la **fig. 4.**

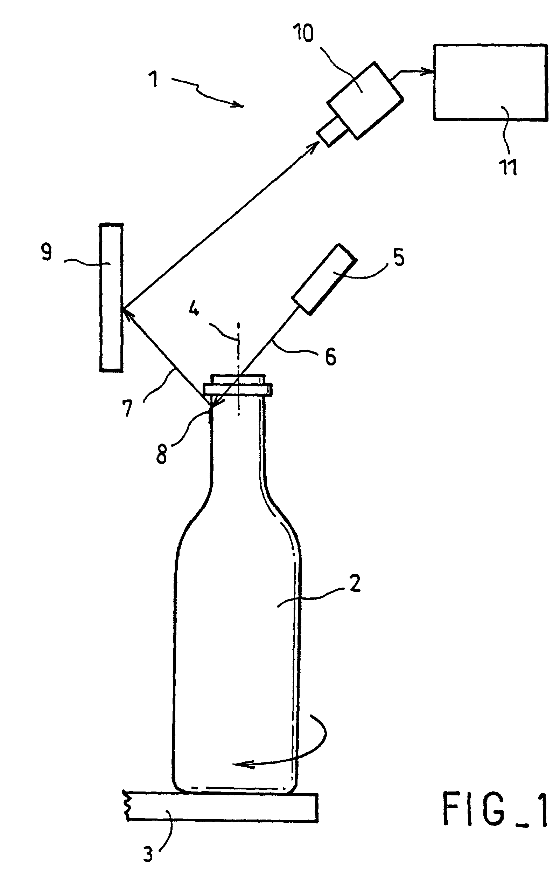

Tel que cela apparaît à la **fig. 1,** le dispositif **1** qui est un mode de réalisation non couvert par les revendications mais utile à la compréhension de l'invention, est conçu pour permettre le contrôle d'objets ou d'articles creux **2** réalisés en un matériau transparent ou translucide tel que du verre. Le dispositif **1** est apte à détecter des défauts, notamment des glaçures susceptibles d'apparaître au niveau d'une zone prédéterminée d'inspection ou de contrôle qui, dans l'exemple illustré, correspond aux bagues des bouteilles **2.** D'une manière classique, les bouteilles **2** sont prises en charge par un système de manipulation approprié **3** permettant d'assurer la rotation des bouteilles autour de leur axe principal longitudinal **4.**

Le dispositif de détection **1** selon l'invention comporte au moins un système d'éclairage **5** conçu pour délivrer un faisceau lumineux incident **6** destiné à éclairer une zone prédéterminée de la bouteille **2,** selon un angle d'incidence approprié, afin d'éviter la confusion entre des faisceaux lumineux réfléchis **7** dus à des glaçures **8** et des réflexions lumineuses parasites dues, notamment, à la présence des filets aménagés sur les bouteilles du type bague à vis.

Le dispositif de détection **1** comporte également un élément optique **9** de collecte ou de récupération des faisceaux réfléchis **7,** afin de les transmettre à un système de réception **10** constitué, dans l'exemple illustré, par une caméra matricielle à haute fréquence d'acquisition permettant d'observer de façon successive chaque point de la bague sur au moins deux images consécutives. La caméra **10** reçoit, par l'intermédiaire de l'élément optique **9,** une image de la zone de la bouteille éclairée par le faisceau incident **6.** Une telle image est susceptible d'évoluer en fonction de la rotation de la bouteille en laissant apparaître les divers faisceaux lumineux réfléchis par l'objet **2** au cours de sa rotation. La caméra **10** transmet ces informations à une unité **11** d'analyse et de traitement d'images.

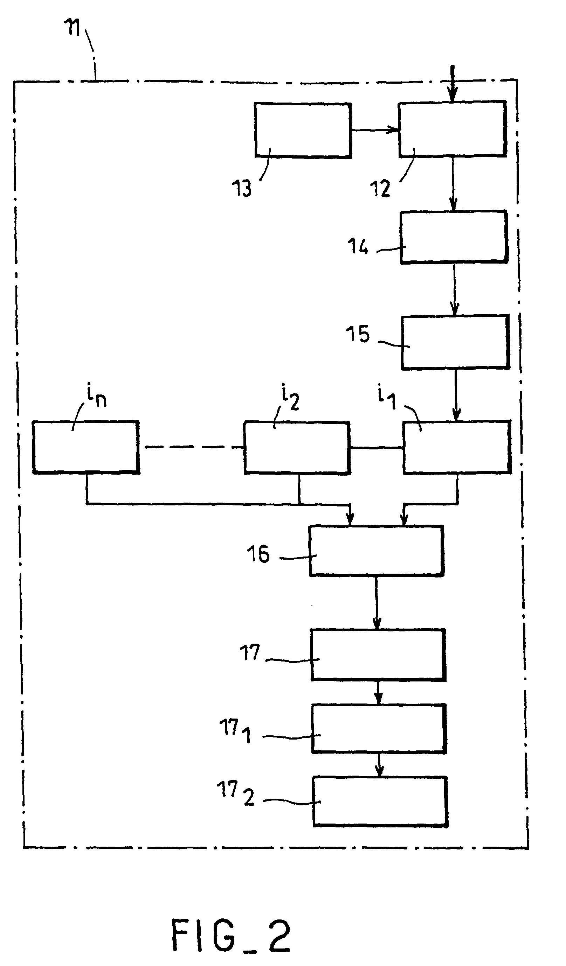

Tel que cela apparaît plus précisément à la **fig. 2,** l'unité **11** d'analyse et de traitement comporte un circuit d'acquisition **12** relié en entrée, à la caméra **10** qui délivre des signaux électroniques représentatifs de l'intensité lumineuse reçue par chacune des cellules photosensibles de la caméra et correspondant aux images apparaissant sur l'élément optique **9.** Le circuit d'acquisition **12** assure la conversion du signal analogique en un signal numérique codé sur un certain nombre de bits suivant une échelle de gris déterminée. Le circuit d'acquisition **12** est relié à une unité de commande **13** reliée à un système non représenté de détection de la présence d'une bouteille **2.** L'unité de commande **13** est également reliée à un codeur associé au système **3** de mise en rotation de la bouteille permettant, comme cela sera expliqué dans la suite de la description, l'acquisition des images à des intervalles de distance prédéterminés. Le circuit d'acquisition **12** est relié, par l'intermédiaire d'un filtre **14,** à un circuit **15** assurant la formation d'images successives $i_1$, $i_2$, ..., $i_n$.

L'unité de traitement **11** comporte également des moyens **16** assurant la réalisation d'une opération de traitement entre au moins deux images successives $i_1$ à $i_n$, de manière à identifier les défauts de glaçures. Les moyens **16** sont reliés, en sortie, à un circuit de seuil **17** adapté pour conserver les signaux dépassant un niveau prédéterminé d'intensité lumineuse. La sortie du circuit de seuil **17** est connectée à un circuit $I7_1$ de mesure des caractéristiques des tâches lumineuses apparaissant sur les images. Le circuit de mesure $17_1$ définit ainsi le niveau de gris moyen du signal correspondant à la luminosité de la réflexion, ainsi que les paramètres morphologiques ou de forme des défauts, tels que la surface, le périmètre et le centre de gravité des tâches lumineuses. Le circuit de mesure $I7_1$ détermine, également, la vitesse d'apparition et de disparition des tâches. L'analyse de toutes ces caractéristiques, à savoir la luminosité, la vitesse d'apparition, les paramètres morphologiques des tâches lumineuses, ainsi que la position spatiale et temporelle des tâches, permet au circuit $I7_1$, par comparaison entre les séquences d'images, de déterminer si la tâche lumineuse correspond ou non à une réflexion de glaçure. Dans le cas où le circuit $17_1$ estime que la tâche lumineuse est due à une réflexion de glaçure, le circuit $17_1$ pilote un circuit de rejet $17_2$ permettant de retirer la bouteille défectueuse du convoyeur.

Le procédé de détection selon l'invention découle directement de la description qui précède.

Dès qu'une bouteille **2** est prise en charge par le système de manipulation **3,** l'unité de commande **13** active la caméra **10,** de manière à acquérir, lors de la rotation de la bouteille sur un tour, des images à une fréquence déterminée, de préférence régulière. A titre d'exemple, la fréquence d'acquisition des images est de 64 images pour un tour de rotation de la bouteille. Les images prises permettent de faire apparaître, sous la forme de tâches ou de traces lumineuses, les réflexions lumineuses **7** provenant soit de défauts réels, tels que des glaçures, soit de parasites notamment dus à la présence des filets de vissage aménagés sur les bouteilles.

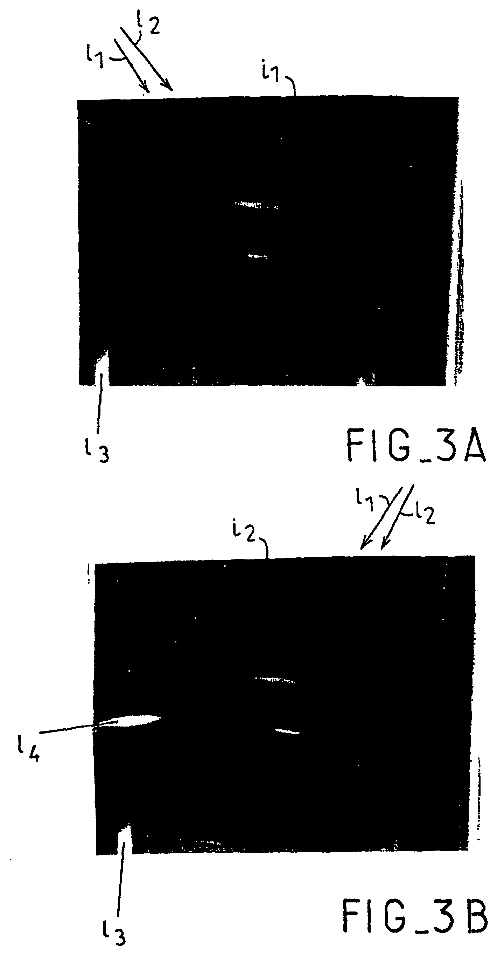

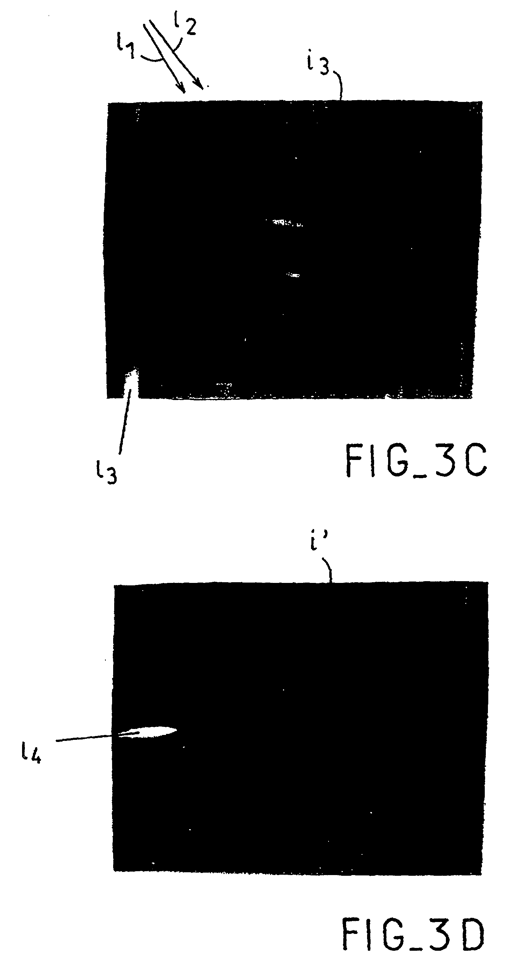

Les **fig. 3A** à **3C** illustrent trois exemples d'images $i_1$, $i_2$, $i_3$ prises successivement par la caméra **10,** respectivement à des temps $t_1$, $t_2$, $t_3$. L'image $i_1$ laisse apparaître, notamment, deux tâches lumineuses centrales $l_1$, $l_2$ et une tâche lumineuse inférieure $l_3$, tandis que l'image $i_2$ permet de distinguer, en plus des tâches $l_1$, $l_2$, $l_3$, une tâche supplémentaire $l_4$. L'image $i_3$ permet de constater la persistance des tâches lumineuses $l_1$, $l_2$, $l_3$ et la disparition de la tâche lumineuse $l_4$.

Il peut donc en être déduit que les tâches $l_1$, $l_2$, $l_3$ sont de nature stationnaire et proviennent de faisceaux réfléchis à caractère parasite, tandis que la tâche lumineuse $l_4$ est de nature variable dans le temps et l'espace et correspond à une glaçure. Une analyse comparative des images prises par la caméra permet d'assurer une distinction entre les signaux dus à des glaçures et des signaux parasites. Dans l'exemple illustré, les moyens **16** comparent les images en effectuant une opération de soustraction entre deux images successives. La **fig. 3D** illustre une image **i'** correspondant à une soustraction des images $i_1$ et $i_2$. L'image **i'** laisse apparaître, notamment, la tâche lumineuse $l_4$ correspondant à un défaut de glaçure. Dans une forme préférée de réalisation, les images successives sont soumises à un traitement d'images consistant à analyser les caractéristiques des tâches lumineuses et l'évolution de ces caractéristiques sur les images successives. Les circuits **17,** **17₁** effectuent ainsi, d'une part, des opérations de détermination et d'analyse des paramètres morphologiques, de la luminosité et des positions spatiale et temporelle des tâches lumineuses apparaissant sur les images successives et, d'autre part, une analyse comparative de ces caractéristiques. Une telle analyse comparative permet de déterminer si le défaut constaté doit entraîner ou non le rejet de l'article.

Le procédé selon l'invention permet ainsi de scruter toute la circonférence de la bague de la bouteille en considérant que chacun des points observés apparaît sur au moins deux images. La détection et l'identification des défauts de glaçures sont obtenues en réalisant une analyse comparative entre au moins deux images successives prises lors de la rotation de l'article. Le procédé selon l'invention offre l'avantage d'être particulièrement efficace et simple à mettre en oeuvre. Bien entendu, l'opération de comparaison entre les images peut être complétée par une opération de correction des positionnements des articles, réalisée par un système approprié de resynchronisation. Par ailleurs, il doit être considéré que l'opération de comparaison peut être différente d'une opération de soustraction. A titre d'exemple préféré, l'opération de comparaison consiste à examiner les différences ou les ressemblances entre les caractéristiques des tâches lumineuses apparaissant sur les images successives. Il doit bien être compris que cette analyse comparative consiste aussi bien en une prise en compte de la position spatiale et temporelle des tâches, que de leurs paramètres morphologiques (surface, périmètre, centre de gravité) et niveau de gris. Selon une caractéristique avantageuse de l'invention, l'analyse de l'évolution des caractéristiques des tâches apparaissant sur les images est réalisée par un algorithme dit "à réseaux de neurones" permettant d'identifier un défaut de glaçure et de le classifier, afin de déterminer s'il correspond à un défaut de glaçure verticale ou horizontale. Cet algorithme permet ainsi de savoir si l'article doit être rejeté ou non en fonction du défaut détecté.

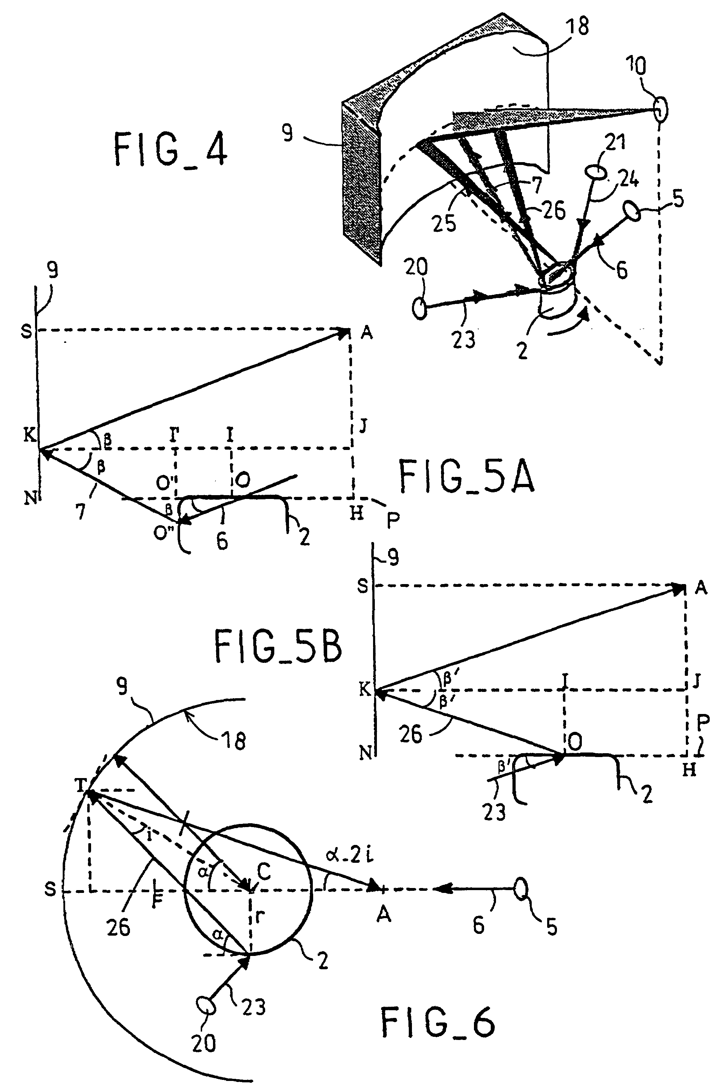

Les **fig. 4, 5A** et **5B** illustrent une autre caractéristique du procédé décrit ci-dessus permettant de détecter aussi bien les glaçures dites horizontales, que les glaçures dites verticales de la bague d'une bouteille. A cet égard, le dispositif **1** selon l'invention comporte un système d'éclairage **5** situé au-dessus du plan **P** horizontal ou transversal, tangent au sommet de la bouteille. Le système d'éclairage **5** est apte à fournir un faisceau incident **6** qui est destiné à éclairer la paroi interne de la bouteille **2,** en vue d'assurer la détection des glaçures horizontales. Tel que cela apparaît plus précisément aux **fig. 4** et **5A,** le faisceau incident **6** forme, avec un plan transversal ou horizontal **P** de la bouteille, un angle $\beta$ compris entre 20 et 60°. Le faisceau de réflexion **7** est récupéré par l'élément optique **9** constitué, avantageusement, par un miroir présentant une surface de réflexion **18** de forme cylindrique dont la concavité est tournée vers l'objet **2.** L'axe vertical de symétrie **OI** du miroir est placé parallèlement et, de préférence, en coïncidence avec l'axe longitudinal **4** de la bouteille. Le miroir cylindrique **9** joue le rôle d'un collecteur de faisceaux lumineux au même titre qu'une lentille collectrice. Les faisceaux lumineux incident **6** et réfléchi **7** sont placés dans un même plan vertical qui passe par le plan diamétral du miroir **9** défini, notamment, par les points **A** et **S.** La mesure **AH,** correspondant à la position du faisceau lumineux dans le plan vertical par rapport au plan horizontal **P** tangent à la bague de la bouteille, est telle que **AH = (R + AS-r)tan($\beta$) - $\Delta$,** (1) avec

    **r :**      le rayon de la bague de l'article **2,**
    **R :**      le rayon du miroir **9,**
    $\Delta$ :      la distance **O'O''.**

Le dispositif **1** selon l'invention comporte également un deuxième **20** et un troisième **21** systèmes d'éclairage aptes à fournir, chacun, respectivement un faisceau lumineux incident **23, 24** adapté pour éclairer la paroi extérieure de l'objet **2,** en vue d'assurer la détection des glaçures verticales. Les systèmes d'éclairage **20, 21** sont placés symétriquement par rapport à l'axe central de symétrie **AS** et en dessous du plan tangent **P.** Les faisceaux lumineux incidents **23, 24** entrainent l'apparition, lors de la présence de glaçures verticales, de faisceaux réfléchis respectifs **25, 26.** La **fig. 5B** illustre, à titre d'exemple, le cheminement du rayon incident **23** et, par suite, du rayon incident **24,** formant un angle β' avec le plan horizontal **P.** Dans le plan vertical, le miroir cylindrique **9** est utilisé comme un miroir plan, dans la mesure où dans ce plan, la courbure est infinie. La mesure **AH** correspondant à la position du faisceau lumineux dans le plan vertical par rapport au plan horizontal **P** tangent à la bague de la bouteille, est telle que **AH = (R + AS)**tang(β'), (2). Tel que cela apparaît plus précisément à la **fig. 6,** la courbure du miroir permet de ramener les faisceaux réfléchis **25, 26** sur l'axe central **AS** du miroir sur lequel se situent déjà les réflexions des glaçures horizontales. Il est à noter que :

$$\text{Sin }(i) = r/R \cos (\alpha)$$

et

$$AS = [R \sin (i) / \sin (\alpha - 2i)] + R, \qquad (3)$$

avec

**r :** le rayon de la bague de l'article **2,**
**R:** le rayon du miroir **9,**
**i :** le demi-angle au sommet entre les faisceaux incident au miroir et réfléchi par le miroir,
α : l'angle d'incidence dans le plan horizontal des faisceaux lumineux **23, 24.**

Il est important que le rayon réfléchi par le miroir passe entre le point **C**, à savoir le centre de courbure du miroir, et le point **F**, à savoir le foyer du miroir, de manière que la réflexion soit ramenée sur l'axe central **AS**. Les points **C** et **F** sont des points limites, dans la mesure où tout rayon passant par le point **C** est réfléchi sur lui même et tout rayon passant par le point **F** est réfléchi parallèlement à l'axe central **AS**. D'une manière avantageuse, le centre de la bouteille **2** est placé de manière à coïncider avec le centre de courbure **C** du miroir en vue, d'une part, de simplifier les calculs pour le positionnement de la caméra et, d'autre part, d'obtenir une zone de réflexion autour du point **A**. L'utilisateur fixe les angles β ou β' et les formules (1), (2) et (3) permettent de déterminer les mesures **AS, AH** et les angles β' ou β.
Il doit être considéré que le point **A** représente théoriquement le point de rencontre, dans l'espace, des rayons réfléchis par les glaçures horizontales et verticales. En pratique, suivant l'orientation de la glaçure, le point de rencontre des rayons réfléchis se situe dans une zone ou un espace situé autour du point **A**. La position de la caméra **10** se calcule donc facilement à partir des formules de la réflexion données ci-dessus. Le système peut être séparé en deux systèmes indépendants de contrôle des glaçures verticales et de contrôle des glaçures horizontales.
L'invention n'est pas limitée aux exemples décrits et représentés, car diverses modifications peuvent y être apportées sans sortir de son cadre.

**Revendications**

1. Procédé pour détecter des défauts **(8)** réfléchissant la lumière et présentés par un objet creux **(2)** transparent ou translucide, le procédé consistant :

   - à éclairer une zone de l'objet creux **(2)** par au moins un faisceau incident **(6, 23, 24)**,
   - à assurer la rotation relative par rapport au faisceau incident de l'objet creux selon son axe central **(4)**,
   - à acquérir les faisceaux lumineux réfléchis **(7, 25, 26)** par l'objet, en vue de former des images successives **(i₁, i₂, ..., iₙ)** de l'objet selon une cadence déterminée,
   - et à réaliser une opération de comparaison entre au moins deux images successives, de manière à distinguer les faisceaux réfléchis de nature stationnaire, correspondant à des réflexions parasites, de ceux de nature variable, correspondant à des défauts de l'objet,

   **caractérisé en ce qu'**il consiste :

   - à effectuer, en tant qu'opération de comparaison, une opération d'analyse comparative des paramètres morphologiques, de la luminosité et des positions temporelle et spatiale des tâches lumineuses apparaissant sur des images successives,
   - à éclairer la paroi intérieure de l'objet, à l'aide d'un faisceau incident, en vue de détecter les défauts horizontaux,
   - à éclairer la paroi extérieure de l'objet à l'aide de faisceaux incidents, en vue de détecter les défauts verticaux,
   - et à disposer, sur le trajet des faisceaux lumineux réfléchis, un élément optique de récupération, en vue de leur acquisition et traitement.

2. Procédé selon la revendication 1, **caractérisé en ce qu'**il consiste à effectuer l'opération d'analyse comparative à partir d'un traitement à réseaux de neurones permettant d'identifier la nature des défauts, en vue de déterminer si l'objet présente un défaut ou non.

3. Dispositif pour détecter des défauts réfléchissant la lumière et présentés par un objet creux **(2)** transparent ou translucide, le dispositif comportant :

   - au moins un système d'éclairage **(5, 20, 21)** apte à fournir un faisceau lumineux incident (**6, 23, 24**) éclairant une zone de l'objet creux,

- un système (**10**) de réception des faisceaux lumineux réfléchis par l'objet,

- et une unité (**11**) d'analyse et de traitement des faisceaux lumineux reçus par le système de réception, comportant :

   . des moyens (**15**) de formation d'images ($i_1$, $i_2$, ..., $i_n$) successives de l'objet à une cadence déterminée,

   . et des moyens (**16**) assurant la réalisation d'une opération de comparaison entre au moins deux images successives, de manière à distinguer les faisceaux réfléchis de nature stationnaire correspondant à des réflexions parasites, de ceux de nature variable correspondant à des défauts de l'objet,

       **caractérisé en ce qu'**il comprend :

- des moyens (**16**) assurant, en tant qu'opération de comparaison, une opération d'analyse comparative des paramètres morphologiques, de la luminosité et des positions temporelle et spatiale des tâches lumineuses apparaissant sur des images successives,

- un premier système d'éclairage (**5**) apte à fournir un faisceau lumineux incident (**6**) éclairant la paroi intérieure de l'objet creux, en vue de détecter des défauts horizontaux,

- un deuxième (**20**) et un troisième (**21**) systèmes d'éclairage aptes à fournir chacun un faisceau lumineux incident (**23, 24**) éclairant une paroi extérieure distincte de l'objet creux, en vue d'assurer la détection des glaçures verticales,

- et un élément optique (**9**) de récupération des faisceaux lumineux réfléchis (**7, 25, 26**) par l'objet, en vue de leur acquisition par le système (**10**) et traitement par l'unité (**11**).

**4.** Dispositif selon la revendication 3, **caractérisé en ce que** l'élément optique (**9**) est constitué par un miroir présentant une surface de réflexion (**18**) cylindrique dont l'axe de symétrie coïncide avec l'axe central de l'objet.

**5.** Dispositif selon la revendication 4, **caractérisé en ce que** le miroir (**9**) de forme cylindrique est adapté de façon que les rayons réfléchis par le miroir passent entre le centre de courbure (**C**) et le foyer (**F**) du miroir.

**6.** Dispositif selon les revendications 3 et 4, **caractérisé en ce que** le premier système d'éclairage (**5**) fournit un faisceau lumineux incident (**6**) formant, avec le plan transversal (**P**) de l'objet, un angle (β) compris entre 20 et 60° et s'étendant dans le plan diamétral du miroir (**9**).

**7.** Dispositif selon la revendication 3, **caractérisé en ce que** les deuxième (**20**) un troisième (**21**) systèmes d'éclairage sont placés symétriquement par rapport à l'axe central de symétrie du miroir (**9**) et en dessus du plan (**P**) tangent au sommet de l'objet.

**8.** Dispositif selon les revendications 3 et 5, **caractérisé en ce que** le système (**10**) de réception des faisceaux lumineux réfléchis par l'objet est situé dans une zone entourant le point de rencontre (**A**) des rayons lumineux réfléchis par le miroir (**9**) placé sur l'axe central du miroir.

## Claims

**1.** A method of detecting light-reflecting defects (8) presented by a transparent or translucent hollow object (2), the method consisting in:

- illuminating a zone of the hollow object (2) with at least one incident beam (6, 23, 24);

- establishing relative rotation between the incident beam and the hollow object, about the central axis (4) of the object;

- acquiring the light beams (7, 25, 26) reflected by the object in order to form successive images ($i_1$, $i_2$, ..., $i_n$) of the object and a determined rate; and

- performing a comparison operation between at least two successive images so as to distinguish between beams that are reflected in steady manner, corresponding to unwanted reflections, from beams that are variable in nature, corresponding to defects of the object;

    the method being **characterized in that** it consists in:

- performing the comparison operation by comparative analysis of morphological parameters, of brightness, and of the positions in time and space of bright marks appearing on successive images;

- illuminating the inside wall of the object using an incident beam in order to detect horizontal defects;

- illuminating the outside wall of the object by means of incident beams, in order to detect vertical defects; and

- placing a light-recovery element on the path of reflected light beams in order to acquire and process them.

**2.** A method according to claim 1, **characterized in that** it consists in performing the comparative analysis operation on the basis of processing by a neural network enabling the nature of defects to be identified, so as to determine whether or not the object presents a defect.

3. Apparatus for detecting light-reflecting defects presented by a transparent or translucent hollow object (2), the apparatus comprising:

   - at least one lighting system (5, 20, 21) suitable for supplying an incident light beam (6, 23, 24) illuminating a zone of the hollow object;
   - a receiver system (10) for receiving light beams reflected by the object; and
   - a unit (11) for analyzing and processing light beams received by the receiver system, and comprising:

      - image forming means (15) for forming successive images ($i_1$, $i_2$, ..., $i_n$) of the object at a determined rate; and
      - comparator means (16) for performing a comparison operation between at least two successive images, so as to distinguish between beams reflected in steady manner and corresponding to unwanted reflections, and beams reflected in varying manner, corresponding to defects of the object;

      the apparatus being **characterized in that** it comprises:
   - comparator means (16) performing comparison by comparative analysis of morphological parameters, brightness, and the positions in time and space of bright marks appearing on successive images;
   - a first lighting system (5) suitable for providing an incident light beam (6) illuminating the inside wall of the hollow object, in order to detect horizontal defects;
   - second and third lighting systems (20 and 21) suitable for providing respective incident light beams (23, 24) illuminating distinct outside walls of the hollow object, in order to detect vertical glazing; and
   - an optical element (9) for recovering light beams (7, 25, 26) reflected by the object, to enable them to be acquired by the system (10) and processed by the unit (11).

4. Apparatus according to claim 3, **characterized in that** the optical element (9) is constituted by a mirror presenting a cylindrical reflection surface (18) whose axis of symmetry coincides with the central axis of the object.

5. Apparatus according to claim 4, **characterized in that** the cylindrical mirror (9) is adapted so that the rays reflected by the mirror pass between the center of curvature (C) and the focus (F) of the mirror.

6. Apparatus according to claim 3 or claim 4, **characterized in that** the first lighting system (5) delivers an incident light beam (6) extending in the diametral plane of the mirror (9) and forming an angle ($\beta$) lying in the range 20° to 60° relative to the transverse plane (P) of the object.

7. Apparatus according to claim 3, **characterized in that** the second and third lighting systems (20 and 21) are placed symmetrically about the central axis of symmetry of the mirror (9) and above the plane (P) tangential to the top of the object.

8. Apparatus according to claims 3 and 5, **characterized in that** the receiver system (10) for receiving light beams reflected by the object is situated in a zone surrounding the point of convergence (A) of light beams reflected by the mirror (9), which point lies on the central axis of the mirror.

**Patentansprüche**

1. Verfahren zum Erkennen von lichtreflektierenden Fehlern (8) an einem durchsichtigen oder lichtdurchlässigen hohlen Gegenstand (2), wobei das Verfahren darin besteht:

   - einen Bereich des hohlen Gegenstandes (2) durch wenigstens ein einfallendes Lichtbündel (6, 23, 24) zu beleuchten,
   - die Relativdrehung des hohlen Gegenstandes um seine zentrale Achse (4) bezüglich des einfallenden Lichtbündels zu gewährleisten,
   - die von dem Gegenstand reflektierten Lichtbündel (7, 25, 26) zu erfassen, um aufeinanderfolgende Abbildungen ($i_1$, $i_2$, ..., $i_n$) des Gegenstandes gemäß einer festgelegten zeitlichen Folge zu erzeugen,
   - und einen Abgleich zwischen wenigstens zwei aufeinanderfolgenden Abbildungen vorzunehmen, um die gleichbleibend reflektierten, Streureflexionen entsprechenden Lichtbündel von den veränderlich reflektierten und Fehlern am Gegenstand entsprechenden Lichtbündeln zu unterscheiden,

   **dadurch gekennzeichnet, daß** es darin besteht,

   - als Abgleich eine Vergleichsanalyse der morphologischen Parameter, der Helligkeit und der zeitlichen und räumlichen Anordnung der in aufeinanderfolgenden Abbildungen auftretenden Lichtflekken durchzuführen,
   - die Innenwand des Gegenstands mit Hilfe eines einfallenden Lichtbündels zur Erkennung horizontaler Fehler zu beleuchten,

- die Außenwand des Gegenstandes mit Hilfe von einfallenden Lichtbündeln zur Erkennung vertikaler Fehler zu beleuchten,

- und im Weg der reflektierten Lichtbündel ein optisches Element zu deren Aufnahme anzuordnen, um diese zu erfassen und zu verarbeiten.

2. Verfahren nach Anspruch 1,
**dadurch gekennzeichnet, daß** es darin besteht, die Vergleichsanalyse durch eine Verarbeitung mit neuronalen Netzen auszuführen, die eine Bestimmung der Fehlerart erlaubt, um festzulegen, ob der Gegenstand einen Fehler aufweist oder nicht.

3. Vorrichtung zum Erkennen von lichtreflektierenden Fehlern an einem durchsichtigen oder lichtdurchlässigen hohlen Gegenstand (2), wobei die Vorrichtung folgendes umfaßt:

- wenigstens ein Beleuchtungssystem (5, 20, 21), das ein einfallendes Lichtbündel (6, 23, 24) zu liefern vermag, welches einen Bereich des hohlen Gegenstandes beleuchtet,

- ein System (10) zum Empfang der vom Gegenstand reflektierten Lichtbündel,

- und eine Einheit (11) zur Analyse und Verarbeitung der von dem Lichtbündelempfangssystem empfangenen Lichtbündel, die folgendes umfaßt:

  . Mittel (15) zur Erzeugung aufeinanderfolgender Abbildungen ($i_1$, $i_2$, ..., $i_n$) des Gegenstandes in einer bestimmten zeitlichen Folge,

  . und Mittel (16), die die Durchführung eines Abgleichs zwischen wenigstens zwei aufeinanderfolgenden Abbildungen gewährleisten, um die gleichbleibend reflektierten, Streureflexionen entsprechenden Lichtbündel von den veränderlich reflektierten und Fehlern am Gegenstand entsprechenden Lichtbündeln zu unterscheiden,

  **dadurch gekennzeichnet, daß** sie folgendes umfaßt:

- Mittel (16), die als Abgleich eine Vergleichsanalyse der morphologischen Parameter, der Helligkeit und der zeitlichen und räumlichen Anordnung der in aufeinanderfolgenden Abbildungen auftretenden Lichtflecken gewährleisten,

- ein erstes Beleuchtungssystem (5), das ein einfallendes Lichtbündel (6) zu liefern vermag, welches die Innenwand des hohlen Gegenstandes zur Erkennung horizontaler Fehler beleuchtet,

- ein zweites (20) und ein drittes (21) Beleuchtungssystem, die je ein einfallendes Lichtbündel (23, 24) zu liefern vermögen, welches eine weitere Außenwand des hohlen Gegenstandes beleuchtet, um die Erkennung vertikaler Oberflächenrisse zu gewährleisten,

- und ein optisches Element (9) zur Aufnahme der vom Gegenstand reflektierten Lichtbündel (7, 25, 26), um diese durch das System (10) zu erfassen und durch die Einheit (11) zu verarbeiten.

4. Vorrichtung nach Anspruch 3,
**dadurch gekennzeichnet, daß** das optische Element (9) aus einem Reflektor besteht, der eine zylindrische Reflexionsfläche (18) aufweist, deren Symmetrieachse mit der zentralen Achse des Gegenstandes zusammenfällt.

5. Vorrichtung nach Anspruch 4,
**dadurch gekennzeichnet, daß** der zylinderförmige Reflektor (9) so angepaßt ist, daß die vom Reflektor reflektierten Strahlen zwischen dem Krümmungsmittelpunkt (C) und dem Brennpunkt (F) des Reflektors verlaufen.

6. Vorrichtung nach den Ansprüchen 3 und 4,
**dadurch gekennzeichnet, daß** das erste Beleuchtungssystem (5) ein einfallendes Lichtbündel (6) liefert, das mit der querverlaufenden Ebene (P) des Gegenstandes einen Winkel (β) zwischen 20° und 60° bildet und in der diametralen Ebene des Reflektors (9) verläuft.

7. Vorrichtung nach Anspruch 3,
**dadurch gekennzeichnet, daß** das zweite (20) und das dritte (21) Beleuchtungssystem bezüglich der zentralen Symmetrieachse des Reflektors (9) symmetrisch und oberhalb der den höchsten Punkt des Gegenstandes berührenden Ebene (P) angeordnet sind.

8. Vorrichtung nach den Ansprüchen 3 und 5,
**dadurch gekennzeichnet, daß** das System (10) zum Empfang der vom Gegenstand reflektierten Lichtbündel in einem Bereich liegt, der den auf der zentralen Achse des Reflektors liegenden Treffpunkt (A) der vom Reflektor (9) reflektierten Lichtstrahlen umgibt.

FIG_1

FIG_2

FIG_3A

FIG_3B

FIG_3C

FIG_3D

FIG_4

FIG_5A

FIG_5B

FIG_6